# EUROPEAN PATENT APPLICATION

(11) **EP 4 428 492 A1**
(43) Date of publication of application: **11.09.2024**
(21) Application number: 22903034.1
(22) Date of filing: 21.10.2022
(51) Int. Cl.: G01C 19/72, G02B 6/27

(54) **SIN-BASED INTEGRATED OPTICAL CHIP FOR OPTICAL FIBER GYROSCOPE EMPLOYING SION POLARIZER**

(30) Priority: 06.12.2021 CN 202111472069
(71) Applicant: Shenzhen Osnav Industrial Co., Ltd., Shenzhen, Guangdong 518105 (CN)
(72) Inventor: LIU, Xiaoping, Shenzhen, Guangdong 518105 (CN); LV, Haibin, Shenzhen, Guangdong 518105 (CN)
(74) Representative: Williams Powell
(86) International application number: PCT/CN2022/126677
(87) International publication number: WO 2023/103610

(57) **Abstract**

An embodiment of the present disclosure provides a SiON-polarizer-based integrated SiN optical chip for fibre optic gyroscopes, including a first optical fibre-waveguide mode transducer, a second optical fibre-waveguide mode transducer, a first 3dB coupler, a SiON polarizer, a second 3dB coupler, a third optical fibre-waveguide mode transducer and a fourth optical fibre-waveguide mode transducer. By means of the present disclosure, stability and reliability of the open-loop fibre optic gyroscope can be effectively improved while precision thereof is ensured, multiple properties of the open-loop fibre optic gyroscope is improved, and smaller size, lower power consumption, lower cost and simpler structural design and process of the open-loop fibre optic gyroscope are achieved.

## Description

The present application claims priority to Chinese Patent Application No. 202111472069.0, filed to China National Intellectual Property Administration on December 6, 2021 and entitled "SiON-polarizer-based Integrated SiN Optical Chip For Fibre Optic Gyroscopes", the contents of which are hereby incorporated by reference in its entirety.

### TECHNICAL FIELD

The present disclosure relates to the technical fields of integrated optics and inertial sensing, in particular to a SiON-polarizer-based integrated SiN optical chip for fibre optic gyroscopes.

### BACKGROUND ART

Since gyroscopes capable of precisely measuring angular displacement and being high in sensitivity play an important role in a series of fields such as airborne navigation, robots, unmanned vehicle driving, and geographical mapping, compact gyroscopes with low cost are more popular in the market. Optical gyroscopes based on Sagnac effects have been widely concerned because of their high sensitivity, and have been developed into a multi-purpose mature technology. Compared to traditional mechanical gyroscopes based on the conservation of angular momentum, optical gyroscopes are not provided with motion modules, so they are not affected by gravity, impact, and vibration, which also means that no special universal suspension or packaging means is required.

With the rapid development of low-loss single-mode optical fibres and various fibre optic devices used in the field of communication, all-fibre optical gyroscopes are developed when the optical fibres and the fibre optic devices are applied to the optical gyroscopes. As typical representatives of optical gyroscopes, the fibre optic gyroscopes have been developed into mature technical means with high sensitivity, stability and reliability at present, have better performance than most advanced micro-electro-mechanic system-based gyroscopes, and have lower cost and power consumption and smaller size. A typical fibre optic gyroscope mainly includes three assemblies, a passive sensing fibre optic coil, an optical component consisting of active and passive devices (such as an optical source, a phase modulator, a photodetector, and couplers), and a readout circuit. To continuously improve the passive sensing element, researchers have carried out a lot of related research in recent years and invented a series of novel optic fibres, such as hollow optic fibres with extremely low nonlinearity and thermal effects and optic fibres with high polarization extinction ratios. In addition, more complex optic fibre winding technologies are continuously developed to eliminate nonreciprocal noise and drifting caused by thermal gradient and vibration. Further development includes the adoption of thinner claddings or multi-core optical fibres, to significantly reduce the size of sensing fibre optic coils, while still keeping high sensitivity.

However, most fibre optic gyroscopes at present generate, modulate and detect optical signals through discrete optical devices, and these discrete optical devices are usually connected together through tail fibres, to form Sagnac interferometric optical loops. Although there is a certain freedom to choose different discrete optical devices in making the fibre optic gyroscope, a series of problems, such as parasitic reflection, insertion losses increased at connection points, and environment-sensitive polarization mismatch will also be caused, and the performance of a system will be reduced by the above conditions to different degrees. Although influences of the above effects can be reduced as much as possible by adopting, for example, mode and polarization filtering devices, packaging cost is increased correspondingly. In addition, the size and weight of the system will also be increased by adopting a series of discrete optical devices.

To avoid parasitic reflection, insertion losses increased at connection points, and environment-sensitive polarization mismatch introduced by the discrete devices, researchers have proposed integrated optical gyroscopes in recent years with the development of integrated photonics. Integrated optical driver chips are formed by integrating all active and passive optical devices, except sensing coils, needed by the optical gyroscopes, and the device chips can be connected with the sensing coils, such as passive optical fibres or ultra-low-loss silicon nitride waveguides to form interferometric optical gyroscopes. Therefore, the size, weight, loss, and manufacturing cost of the optical gyroscopes are greatly reduced by the adoption of the integrated driver chips. Therefore, they play an important role in promoting the popularization of the optical gyroscopes.

Integrated optical chips widely applied to fibre optic gyroscope systems at present are integrated chips based on lithium niobate (LiNbO₃) materials. A Y-type beam splitter, a polarizer, and a phase modulator are integrated on the same chip, which are mainly used for closed-loop fibre optic gyroscope under different degrees of precision, thereby achieving closed-loop feedback of interferometric phases, reducing influences of device drifting and achieving high precision. On the other hand, during actual application, the integrated chips based on the lithium niobate materials also have the following shortcomings: (1) a manufacturing method for lithium niobate optical waveguides is a proton exchange method, which has high requirements for proton exchange time and temperature, characteristics of an exchange medium and annealing temperature and time, and a preparation process is complex and high in cost; and (2) thermo-optical coefficients of the materials are high; and when light passes through the LiNbO₃ materials, optical transmission characteristics of the devices will be affected due to the change in environmental temperature, thereby generating a temperature drifting effect. Therefore, a temperature compensation measure must be taken to ensure the working stability of the devices within a wide temperature range, resulting in a complex peripheral control circuit.

### SUMMARY

A technical problem to be solved by an embodiment of the present disclosure is to provide a SiON-polarizer-based integrated SiN optical chip for fibre optic gyroscopes, so as to effectively improve the stability and reliability of the integrated SiN optical chip.

In order to solve the above technical problem, an embodiment of the present disclosure provides a SiON-polarizer-based integrated SiN optical chip for fibre optic gyroscopes, including a first optical fibre-waveguide mode transducer, a second optical fibre-waveguide mode transducer, a first 3dB coupler, a SiON polarizer, a second 3dB coupler, a third optical fibre-waveguide mode transducer and a fourth optical fibre-waveguide mode transducer; wherein
one end of the first optical fibre-waveguide mode transducer is connected with an external optical source through an optical fibre, and the other end of the first optical fibre-waveguide mode transducer is connected with one branch of the first 3dB coupler; one end of the second optical fibre-waveguide mode transducer is connected with an external photodetector through an optical fibre, and the other end of the second optical fibre-waveguide mode transducer is connected with the other branch of the first 3dB coupler; a base waveguide of the first 3dB coupler is connected with one end of the SiON polarizer; the other end of the SiON polarizer is connected with a base waveguide of the second 3dB coupler; one branch of the second 3dB coupler is connected with one end of the third optical fibre-waveguide mode transducer, and the other branch of the second 3dB coupler is connected with one end of the fourth optical fibre-waveguide mode transducer; the other end of the third optical fibre-waveguide mode transducer is connected with one end of an external fibre optic ring; and the other end of the fourth optical fibre-waveguide mode transducer is connected with the other end of the external fibre optic ring.

Furthermore, the first optical fibre-waveguide mode transducer, the second optical fibre-waveguide mode transducer, the third optical fibre-waveguide mode transducer, and the fourth optical fibre-waveguide mode transducer all adopt an inversed taper structure to be matched with an input polarization-maintaining optical fibre in a mode field diameter, and a working wavelength ranges from 800 nm to 900 nm.

Furthermore, the first 3dB coupler and the second 3dB coupler are both achieved by a 1 × 2MMI coupler or a Y-type beam splitter, and a working wavelength ranges from 800 nm to 900 nm.

Furthermore, the structure of the SiON polarizer sequentially consists of a SiO₂ upper cladding, a SiON upper cladding, a SiO₂ intermediate layer, a SiN waveguide, a SiO₂ lower cladding, and a Si substrate from top to bottom.

Furthermore, the SiON upper cladding has a thickness greater than or equal to 1 mm, and a width greater than or equal to 3 mm in a direction perpendicular to the SiN waveguide; and a thickness of the SiN waveguide and waveguide thicknesses of the optical fibre-waveguide mode transducers are kept consistent.

The present disclosure has the following beneficial effects:
1. Since the SiN waveguide has a high transmission characteristic within an 800-900 nm wavelength range, the fibre optic gyroscope based on the integrated SiN optical chip has a higher scale factor within a short wavelength range.
2. High double refraction can be achieved in the SiN waveguide, and good phase error suppression can be achieved by the waveguide with the high double refraction.
3. SiN is a mature material in the microelectronics industry, which is used as an electrical insulator and a thermal insulator in a circuit. Manufacturing technology relevant to the SiN process is mature. SiN further has a series of excellent optical characteristics that make it ideal for many integrated photonic device applications.
4. Temperature stability and reliability of the open-loop fibre optic gyroscope are improved, and miniaturization of the open-loop fibre optic gyroscope is achieved. The influences of the change in environmental temperature on optical transmission characteristics are lower due to a low thermo-optical coefficient of the SiN material, thereby suppressing a temperature drifting effect to a certain degree and improving the temperature stability of the gyroscope. In addition, parasitic reflection, insertion losses increased at connection points, and environment-sensitive polarization mismatch by discrete devices are avoided by integrating optical waveguides and devices, reliability of a system is further improved, the size is reduced, the system is suitable for the integration of the miniaturized open-loop fibre optic gyroscope, and costs of the open-loop fibre optic gyroscope are further reduced.

### BRIEF DESCRIPTION OF THE DRAWINGS

In FIG. 1, (a) is a top view of a optical fibre-waveguide mode transducer according to an embodiment of the present disclosure, and (b) is a cross-section view of the optical fibre-waveguide mode transducer according to the embodiment of the present disclosure.
FIG. 2 is a schematic structural diagram of a Y-type beam splitter according to an embodiment of the present disclosure.
In FIG. 3, (a) is a top view of a SiON polarizer, and (b) is a cross-section view of the SiON polarizer.
FIG. 4 is a schematic structural diagram of a SiON-polarizer-based integrated SiN optical chip for fibre optic gyroscopes according to an embodiment of the present disclosure.

### Brief description of reference signs:

First optical fibre-waveguide mode transducer 1-1, second optical fibre-waveguide mode transducer 1-2, first 3dB coupler 2, bent waveguide A3, SiN waveguide 4-1, SiON cladding 4-2, bent waveguide B5, second 3dB coupler 6, third optical fibre-waveguide mode transducer 7-1, fourth optical fibre-waveguide mode transducer 7-2, an arrow direction of a reference sign 8 is a direction of light output from an external optical source, and an arrow direction of a reference sign 9 is a direction of light output to an external fibre optic ring.

### DETAILED DESCRIPTION OF THE EMBODIMENTS

It should be noted that embodiments and features in the embodiments in the present application may be mutually combined without conflicts. The present disclosure is further described in detail below with reference to the drawings and the specific embodiments.

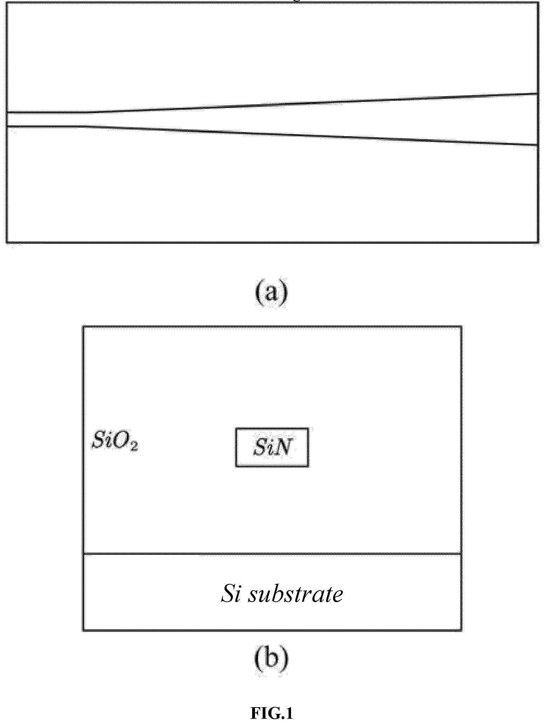

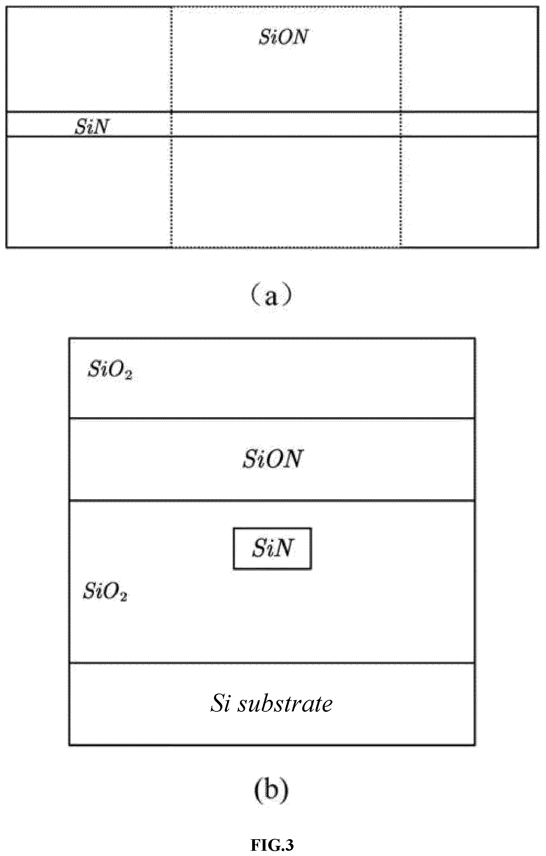

Referring to FIG. 1 to FIG. 4, a SiON-polarizer-based integrated SiN optical chip for fibre optic gyroscopes according to an embodiment of the present disclosure includes a first optical fibre-waveguide mode transducer 1-1, a second optical fibre-waveguide mode transducer 1-2, a first 3dB coupler 2, a SiON polarizer, a second 3dB coupler 6, a third optical fibre-waveguide mode transducer 7-1 and a fourth optical fibre-waveguide mode transducer 7-2.

One end of the first optical fibre-waveguide mode transducer 1-1 is connected with an external optical source through an optical fibre, and the other end of the first optical fibre-waveguide mode transducer 1-1 is connected with one branch of the first 3dB coupler 2; and one end of the second optical fibre-waveguide mode transducer 1-2 is connected with an external photodetector through an optical fibre, and the other end of the second optical fibre-waveguide mode transducer 1-2 is connected with the other branch of the first 3dB coupler 2. A base waveguide of the first 3dB coupler 2 is connected with one end of the SiON polarizer; and the other end of the SiON polarizer is connected with a base waveguide of the second 3dB coupler 6. One branch of the second 3dB coupler 6 is connected with one end of the third optical fibre-waveguide mode transducer 7-1, and the other branch of the second 3dB coupler 6 is connected with one end of the fourth optical fibre-waveguide mode transducer 7-2; the other end of the third optical fibre-waveguide mode transducer 7-1 is connected with one end of an external fibre optic ring; and the other end of the fourth optical fibre-waveguide mode transducer 7-2 is connected with the other end of the external fibre optic ring.

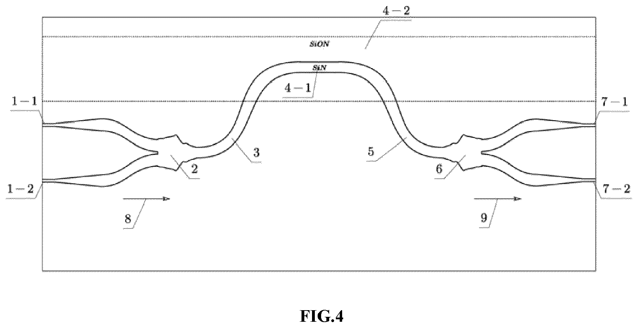

Referring to FIG. 4, light output from the external optical source is coupled to the first optical fibre-waveguide mode transducer 1-1 on the chip in a direction marked by an arrow 8, and light output from the first optical fibre-waveguide mode transducer 1-1 includes two different polarization modes (quasi TE₀ and TM₀); the light in the two different polarization modes enter the SiON polarizer through a bent waveguide A3 after passing through the first 3dB coupler 2, and light in the quasi TM₀ mode leaks to the SiON cladding 4-2, whereas only light in the quasi TE₀ mode is reserved in the SiN waveguide 4-1 due to polarization selection of the polarizer; the light in the TE₀ mode enters the second 3dB coupler 6 through a bent waveguide B5 to be split into two beams, the two beams are coupled into a fibre optic ring after passing through the third optical fibre-waveguide mode transducer 7-1 and the fourth optical fibre-waveguide mode transducer 7-2; and the two light beams are oppositely transmitted in the fibre optic ring in a clockwise direction and a counter-clockwise direction respectively, and the two light beams meet coherent conditions. A Sagnac effect is generated when the fibre optic ring rotates around its central axis, such that intensity of interferometric light returning to the second 3dB coupler 6 changes; and the interferometric light signal is coupled and output to the external photodetector after passing through the second 3dB coupler 6, the bent waveguide B5, the SiON polarizer, the bent waveguide A3, the first 3dB coupler 2 and the second optical fibre-waveguide mode transducer 1-2, so as to detect changed light intensity, and rotational angular speed information is obtained after processing.

As an implementation, the first optical fibre-waveguide mode transducer, the second optical fibre-waveguide mode transducer, the third optical fibre-waveguide mode transducer and the fourth optical fibre-waveguide mode transducer all adopt an inversed taper structure to be matched with an input polarization-maintaining optical fibre as to the mode field diameter, and the working wavelength ranges from 800 nm to 900 nm. As shown in FIG. 1, taking an ultra-thin polarization-maintaining optical fibre as an example, the diameter of the cladding is 40 µm, the diameter of the fibre core is 3 µm, and the mode field diameter in a quasi TE₀ mode in the optical fibre at the wavelength of 830 nm is about 3.7 µm; and with respect to an inversed taper structure, matching with the mode field diameter of the optical fibre can be achieved by optimizing the width of an input end waveguide under the condition of a fixed waveguide thickness. Taking a waveguide thickness of 180 nm as an example, the optimal waveguide width is 130 nm, the mode field diameter of the quasi-TE₀ mode in the corresponding waveguide at 830 nm is about 3.7 µm, such that mode field matching is achieved; and when a taper is long enough, 80% coupling efficiency can be achieved, and mode crosstalk is negligible. In the embodiment, the thickness of the SiN waveguide is 180 nm, the width of the input end waveguide is 130 nm, and the mode field diameter of the quasi TE₀ mode in the corresponding waveguide at 830 nm is about 3.7 µm. The length of the input end straight waveguide is 20 µm,the length of the taper is 100 µm, and the width of the output end waveguide is 550 nm.

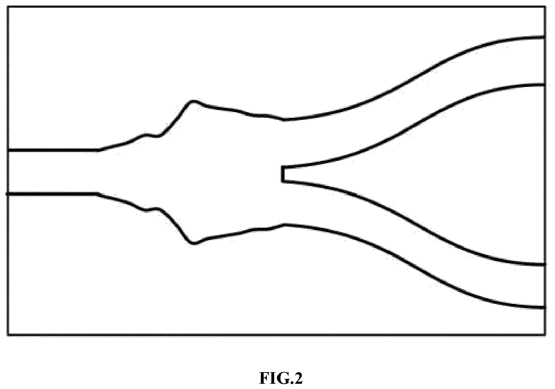

As an implementation, the first 3dB coupler 2 and the second 3dB coupler 6 are both achieved by a 1 × 2MMI coupler or a Y-type beam splitter, and the working wavelength ranges from 800 nm to 900 nm. In order to reduce parasitic reflection and machining errors, the boundary of the Y-type beam splitter is optimized based on the inverse design principle, the interval between two output ports is increased on the premise of ensuring a high enough forward transmittance and inhibited backward reflection, and structural design is shown in FIG. 2. In the embodiment, the thickness of the SiN waveguide is 180 nm, the length of the coupling region is 4 µm, discrete widthsused for generating continuous boundary distribution, uniformly distributed in the coupling region are 0.55 µm, 0.65 µm, 0.76 µm, 0.93 µm, 1.29 µm, 1.75 µm, 1.65 µm, 1.58 µm, 1.52 µm, 1.42 µm, 1.4 µm and 1.3 µm respectively, and the distance between two arms is 0.2 µm.

As an implementation, the structure of the SiON polarizer sequentially consists of a SiO₂ upper cladding, a SiON upper cladding, a SiO₂ intermediate layer, a SiN waveguide, a SiO₂ lower cladding and a Si substrate from top to bottom. The design principle of the polarizer is as follows: a waveguide size is reasonably selected within the target working waveguide range of 800 nm to 900 nm, such that only quasi TE₀/TM₀ modes are supported; the upper coupling SiON slab waveguide is introduced, and the coupling between the quasi TM₀ mode and the slab waveguide mode is increased as much as possible by adjusting the refractive index (between effective refractive indexes of the quasi TE₀/TM₀) of SiON and the spacing from the SiN waveguide, such that mode field distribution of the TM₀ mode is extended into the slab SiON waveguide, and thereby greatly reducing the energy distribution proportion in the SiN waveguide; and on the other hand, weak coupling between the quasi TE₀ mode and the slab waveguide mode is ensured, such that energy is mainly concentrated in the SiN waveguide. In the embodiment, the size of the SiN waveguide is 550 nm × 180 nm, the thickness of the SiON cladding is 1 mm, the width of the SiON cladding in a direction perpendicular to the waveguide is 3 mm, and the distance between the SiON cladding and the SiN waveguide is 200 nm.

As an implementation, the thickness of the SiON upper c ladding, the thickness of the SiO2 intermediate layer and the width and height of the SiN waveguide respectively meet: the thickness of the SiON upper cladding is greater than or equal to 1 mm, and the width of the SiON upper cladding in the direction perpendicular to the SiN waveguide is greater than or equal to 3 mm; the thickness of the SiN waveguide and waveguide thicknesses of the optical fibre-waveguide mode transducers are kept consistent; an appropriate width of the SiN waveguide is selected to ensure that only TE₀ and TM₀ modes are supported in the waveguide and the difference between the effective refractive indexes therebetween is as large as possible, and a reasonable value range is [400 nm, 600 nm]; and selection of the thickness of the SiO₂ intermediate layer is related to the geometric dimension of the SiN waveguide, so as to ensure that the difference between energy distribution proportions of the TE₀ and TM₀ modes in the SiON upper cladding is as large as possible, and taking 550 nm × 180 nm as an example, an appropriate thickness of the SiO₂ intermediate layer is 200 nm.

By means of the present disclosure, the stability and reliability of the open-loop fibre optic gyroscope can be effectively improved while precision thereof is ensured, multiple properties of the open-loop fibre optic gyroscope is improved, and smaller size, lower power consumption, lower cost and simpler structural design and process of the open-loop fibre optic gyroscope are achieved.

Although the embodiments of the present disclosure have been shown and described, various changes, modifications, replacements and variations can be made to these embodiments by those ordinarily skilled in the art without departing from the principle and spirit of the present disclosure, and the scope of the present disclosure is defined by appended claims and equivalents thereof.

## Claims

1. A SiON-polarizer-based integrated SiN optical chip for fibre optic gyroscopes, **characterized by** comprising a first optical fibre-waveguide mode transducer, a second optical fibre-waveguide mode transducer, a first 3dB coupler, the SiON polarizer, a second 3dB coupler, a third optical fibre-waveguide mode transducer and a fourth optical fibre-waveguide mode transducer; wherein
one end of the first optical fibre-waveguide mode transducer is connected with an external optical source through an optical fibre, and the other end of the first optical fibre-waveguide mode transducer is connected with one branch of the first 3dB coupler; one end of the second optical fibre-waveguide mode transducer is connected with an external photodetector through an optical fibre, and the other end of the second optical fibre-waveguide mode transducer is connected with the other branch of the first 3dB coupler; a base waveguide of the first 3dB coupler is connected with one end of the SiON polarizer; the other end of the SiON polarizer is connected with a base waveguide of the second 3dB coupler; one branch of the second 3dB coupler is connected with one end of the third optical fibre-waveguide mode transducer, and the other branch of the second 3dB coupler is connected with one end of the fourth optical fibre-waveguide mode transducer; the other end of the third optical fibre-waveguide mode transducer is connected with one end of an external fibre optic ring; and the other end of the fourth optical fibre-waveguide mode transducer is connected with the other end of the external fibre optic ring.

2. The SiON-polarizer-based integrated SiN optical chip for fibre optic gyroscopes according to claim 1, **characterized in that** the first optical fibre-waveguide mode transducer, the second optical fibre-waveguide mode transducer, the third optical fibre-waveguide mode transducer and the fourth optical fibre-waveguide mode transducer all adopt an inversed taper structure to be matched with an input polarization-maintaining optical fibre in a mode field diameter, and a working wavelength ranges from 800 nm to 900 nm.

3. The SiON-polarizer-based integrated SiN optical chip for fibre optic gyroscopes according to claim 1, **characterized in that** the first 3dB coupler and the second 3dB coupler are both achieved by a 1 × 2MMI coupler or a Y-type beam splitter, and a working wavelength ranges from 800 nm to 900 nm.

4. The SiON-polarizer-based integrated SiN optical chip for fibre optic gyroscopes according to claim 1, **characterized in that** a structure of the SiON polarizer sequentially consists of a SiO₂ upper cladding, a SiON upper cladding, a SiO₂ intermediate layer, a SiN waveguide, a SiO₂ lower cladding and a Si substrate from top to bottom.

5. The SiON-polarizer-based integrated SiN optical chip for fibre optic gyroscopes according to claim 4, **characterized in that** the SiON upper cladding has a thickness greater than or equal to 1 mm, and a width greater than or equal to 3 mm in a direction perpendicular to the SiN waveguide; and a thickness of the SiN waveguide and waveguide thicknesses of the optical fibre-waveguide mode transducers are kept consistent.
